# EUROPÄISCHE PATENTSCHRIFT

(11) **EP 3 144 418 B1**
(45) Veröffentlichungstag und Bekanntmachung des Hinweises auf die Patenterteilung: **10.11.2021**
(21) Anmeldenummer: 16184725.6
(22) Anmeldetag: 18.08.2016
(51) Int. Cl.: D01H 1/20, B65H 63/00, D01H 4/42, G05B 19/042, G05B 19/418

(54) **VERFAHREN ZUM ANPASSEN EINER EINE GARNPARTIEHERSTELLUNG BETREFFENDEN WERKSSEITIGEN AUSLEGUNG EINER OFFENEND-ROTORSPINNMASCHINE**
METHOD FOR ADAPTING A WORK-SIDE DESIGN OF AN OPEN ENDED ROTOR SPINNING MACHINE RELATED TO YARN SECTION PRODUCTION
PROCEDE D'ADAPTATION D'UNE CONCEPTION USINE CONCERNANT UNE FABRICATION DE LOT DE FIL D'UN METIER A TISSER A ROTOR A EXTREMITE OUVERTE

(30) Priorität: 17.09.2015 DE 102015012214
(43) Veröffentlichungstag der Anmeldung: 22.03.2017
(73) Patentinhaber: Saurer Spinning Solutions GmbH & Co. KG, 52531 Übach-Palenberg (DE)
(72) Erfinder: Mac, Tai, 52146 Würselen (DE)
(74) Vertreter: Morgenthum-Neurode, Mirko

(56) Entgegenhaltungen:
- EP-A1- 2 955 143
- EP-A2- 2 966 201
- WO-A1-2006/090082
- WO-A1-2011/069911
- WO-A2-2005/035843
- CN-C- 100 494 029
- DE-A1- 10 142 976

## Beschreibung

Die Erfindung betrifft ein Verfahren zum Anpassen einer eine Garnpartieherstellung betreffenden werksseitigen Auslegung insbesondere einer Offenend-Rotorspinnmaschine, die mehrere Arbeitsstellen jeweils zum Herstellen einer Garnpartie und eine Zentralsteuereinrichtung aufweist, die eingerichtet ist, basierend auf einer aus einem Speicher auslesbaren Ansteuerroutine gleiche Garnpartie herstellende Arbeitsstellen mit zum Herstellen der gleichen Garnpartie erforderlichen Steuerdaten anzusteuern.

Textilmaschinen wie bspw. Offenend-Rotorspinnmaschinen bestehen in der Regel aus einer Vielzahl von in Reihe nebeneinander angeordneten Arbeitsstellen zum Herstellen einer Garnpartie. Solche Arbeitsstellen weisen im Allgemeinen jeweils eine Spinnvorrichtung zur Fertigung eines Fadens, einen Garnreiniger zur Überprüfung der Qualität des erzeugten Fadens, eine Fadenabzugseinrichtung sowie eine Spulvorrichtung zur Herstellung einer in einem Spulenrahmen drehbar gehalterten Kreuzspule auf. Die Spinnvorrichtungen weisen in ihrem Spinngehäuse mit hoher Drehzahl umlaufende Spinnrotoren sowie Faserbandspeisevorrichtungen und Auflösewalzen auf, wobei die Spinnrotoren, Auflösewalzen sowie Spulenantriebswalzen und Fadenführer der Spulvorrichtungen maschinenlange Antriebe besitzen und wobei die Faserbandeinzugszylinder der Faserbandspeisevorrichtungen einzelmotorisch angetrieben werden. Mittels der Spinn- und Spulvorrichtungen wird das in einer Spinnkanne vorgelegte Faserband zu einem Garn versponnen und zu einer Kreuzspule aufgewickelt.

Ferner umfassen Offenend-Rotorspinnmaschinen eine Zentralsteuereinrichtung sowie ein spinnmaschineneigenes Unterdrucksystem. Des Weiteren kann jede Arbeitsstelle über eine Arbeitsstellen-Steuereinrichtung verfügen.

Die Spinn- respektive Spulvorrichtungen stehen jeweils mit der Zentralsteuereinrichtung und/oder der Arbeitsstellen-Steuereinrichtung in Verbindung. Die einzelnen Arbeitsstellen-Steuereinrichtungen können ihrerseits gegebenenfalls über Sektionssteuereinheiten an die Zentralsteuereinrichtung der semiautomatischen Offenend-Rotorspinnmaschine angeschlossen sein.

Solche Offenend-Rotorspinnmaschinen sind in der Textilindustrie in verschiedenen Ausführungsformen im Einsatz und in zahlreichen Druckschriften ausführlich beschrieben.

Eine Offenend-Rotorspinnmaschine ist beispielsweise durch das Dokument EP 1 283 288 A2 bekannt. Die Arbeitsstellen dieser Textilmaschine sind jeweils mit einer Vielzahl von Einzelantrieben ausgerüstet und so ausgebildet, dass sie Störfälle selbsttätig beheben können. Dazu weisen die Arbeitsstellen neben einer spinnstelleneigenen, einzelmotorisch angetriebenen Saugdüse unter anderem auch Einzelantriebe für die Fadenchangiereinrichtung, die Spulenantriebswalze sowie die Fadenabzugseinrichtung auf.

Mit dem Dokument DE 198 36 065 A1 wird eine so genannte automatische Offenend-Rotorspinnmaschine offenbart, bei der sowohl die Arbeitsorgane der Spinnvorrichtung als auch die Arbeitsorgane der Spulvorrichtung über maschinenlange Antriebsmittel beaufschlagt werden. Dabei sind im Bereich der Spinnvorrichtungen Tangentialriemen zum Antreiben der Spinnrotoren und der Auflösewalzen sowie eine maschinenlange Antriebswelle zum Beaufschlagen der Faserbandeinzugszylinder angeordnet, wobei die zugehörigen Antriebe in einem maschinenendseitig angeordneten Maschinengestell installiert sind. Im Bereich der Spulvorrichtungen sind die Spulenantriebswalzen auf maschinenlangen Spulenantriebswellen angeordnet und die Changierfadenführer auf einer hin- und hergehenden Fadenführerstange festgelegt, die an ein maschinenendseitig angeordnetes Changiergetriebe angeschlossen sind. Des Weiteren sind Fadenabzugseinrichtungen vorhanden, deren angetriebene Abzugswalzen ebenfalls Bestandteil einer maschinenlangen Antriebswelle sind.

Die Arbeitsstellen einer automatischen Offenend-Rotorspinnmaschine werden durch Serviceaggregate betreut, die beispielsweise entlang der Arbeitsstellen patrouillieren und selbsttätig eingreifen, wenn an einer der Arbeitsstellen ein Störfall eingetreten ist.

Mit der auf die Anmelderin zurückgehenden, nachveröffentlichten Druckschrift DE 10 2014 008 814 A1 wird eine so genannte semiautomatische Offenend-Rotorspinnmaschine vorgeschlagen, mittels welcher unterschiedliche Garnpartien auf einer Maschinenseite der semiautomatischen Offenend-Rotorspinnmaschine herstellbar sind. Dazu sind die Steuereinrichtungen von in ihrer Größe frei wählbaren Gruppen von Arbeitsstellen werksseitig jeweils so ausgelegt, dass sie sich von anderen Gruppen in der Ansteuerung mindestens einer der Funktionen Reinigereinstellung, Anspinnereinstellung, Faserbandspeisung, Spulendurchmesser, Garnfeinheit und Effekteinstellung unterscheiden. Die Größe der Gruppen bzw. die Anzahl der Arbeitsstellen, die eine gleiche Garnpartie produzieren, ist dabei variabel und bedarfsabhängig steuerbar.

Den bisher vorbekannten Textilmaschinen ist jedoch gemein, dass deren Auslegung hinsichtlich einer Anzahl an parallel herstellbaren unterschiedlichen Garnpartien bereits werksseitig entsprechend den ursächlichen Kundenanforderungen festzulegen ist. Eine nachträgliche Änderung dieser werksseitigen Auslegung ist insbesondere für Textilmaschinen, die entsprechend dem ursprünglichen Kundenwunsch werksseitig nur zum gleichzeitigen Herstellen einer einzigen Garnpartie ausgelegt sind, nicht ohne erheblichen Aufwand und ohne kostenintensive Änderungen möglich. Denn dazu müssten beispielsweise entsprechende Komponenten ausgetauscht und die Steuersoftware umfangreich geändert werden. Der Aufwand und die Änderungen können dabei so enorm sein, dass die Anschaffung einer neuen Textilmaschine zu präferieren wäre.

WO 2006/090082 A1 offenbart ein Verfahren zum Auswählen von unterschiedlichen werksseitigen Ansteuerroutine zum Herstellen unterschiedlichen Garnpartie und zum Ansteuern der bereits werksseitig ausgestatteten Arbeitsstellen einer Textilmaschine nach diesen Ansteuerroutine.

CN 100 494 029 C beschreibt ein Verfahren zum Aktualisieren von Programme in einer Textilmaschine um dessen Stillstandszeiten zu reduzieren. In WO 2011/069911 A1 kommunizieren arbeitsstellen eigene Steuerungen mit einer Zentralsteuereinrichtung um die konfiguration der Arbeisstellen zu ändern.

Ausgehend vom vorgenannten Stand der Technik liegt der Erfindung die Aufgabe zugrunde, eine höhere Flexibilität für Textilmaschinen, insbesondere von Offenend-Rotorspinnmaschinen, mit Blick auf eine mit einfachen und kostengünstigen Mitteln durchführbare Änderung einer eine Garnpartieherstellung betreffenden werksseitigen Auslegung zu schaffen.

Diese Aufgabe wird durch ein Verfahren zum Anpassen einer eine Garnpartieherstellung betreffenden werksseitigen Auslegung einer Textilmaschine, insbesondere einer Offenend-Rotorspinnmaschine, mit den Merkmalen nach dem Anspruch 1 gelöst. Vorteilhafte Ausgestaltungen der Erfindung sind Gegenstand der Unteransprüche.

Die Textilmaschine weist mehrere Arbeitsstellen und eine Zentralsteuereinrichtung auf, wobei jede Arbeitsstelle zum Herstellen einer Garnpartie ausgelegt und die Zentralsteuereinrichtung eingerichtet ist, basierend auf einer aus einem Speicher abrufbaren Ansteuerroutine die eine gleiche Garnpartie herstellenden Arbeitsstellen mit zum Herstellen der gleichen Garnpartie erforderlichen Steuerdaten anzusteuern.

Zur Lösung der gestellten Aufgabe umfasst das vorgeschlagene Verfahren einen Schritt des Erstellens einer Auswahl an Ansteuerroutinen, die wenigstens eine erste bis dritte Ansteuerroutine umfasst, die ein zueinander unterschiedliches Ansteuern der Arbeitsstellen durch die Zentralsteuereinrichtung zum Herstellen einer Garnpartie ermöglichen.

Die erste Ansteuerroutine ist ausgelegt, alle Arbeitsstellen mit Steuerdaten zum Herstellen einer ersten Garnpartie anzusteuern. Beim Ansteuern der Arbeitsstellen mit Steuerdaten gemäß der ersten Ansteuerroutine wird über sämtliche produzierende Arbeitsstellen der Textilmaschine eine gleiche Garnpartie hergestellt. Die Arbeitsstellen sind dadurch einer einzigen gemeinsamen Gruppe zugeordnet. Die erste Ansteuerroutine ist vorteilhaft für eine werksseitige Auslegung einer Textilmaschine, mittels der ausschließlich eine gleiche Garnpartie herzustellen ist. Eine solche Ansteuerroutine ist softwareseitig einfach ohne komplexere Verknüpfungen bzw. Algorithmen aufbaubar.

Die zweite Ansteuerroutine ist ausgelegt, eine erste Gruppe von Arbeitsstellen mit Steuerdaten zum Herstellen einer ersten Garnpartie und eine zweite Gruppe von Arbeitsstellen mit Steuerdaten zum Herstellen einer zweiten Garnpartie anzusteuern. Die Arbeitsstellen der Textilmaschine sind entsprechend in zwei Gruppen zum parallelen Herstellen unterschiedlicher Garnpartien aufzuteilen. Entsprechend unterscheiden sich die Steuerdaten für die unterschiedlichen Gruppen von Arbeitsstellen. Die zweite Ansteuerroutine ist vorteilhaft für eine Auslegung einer Textilmaschine, insbesondere einer Offenend-Rotorspinnmaschine, mittels der zwei unterschiedliche Garnpartien hergestellt werden sollen. Eine solche Ansteuerroutine ist weiterhin einfach aufgebaut und weist im Vergleich zu der ersten Ansteuerroutine zusätzliche Verknüpfungen oder Algorithmen zum Ansteuern zweier gruppenmäßig zusammengefasster Arbeitsstellen auf.

Die dritte Ansteuerroutine ist ausgelegt, eine anzahlmäßig festzulegende Gruppe von Arbeitsstellen mit Steuerdaten entsprechend einer der jeweiligen Gruppe zugeordneten Garnpartie jeweilig anzusteuern, wobei die Anzahl der festzulegenden Gruppen zwei übersteigt. Mittels der dritten Ansteuerroutine können mehr als zwei Gruppen von Arbeitsstellen angesteuert werden, wodurch eine parallele Herstellung von mehr als zwei Garnpartien mit der Offenend-Rotorspinnvorrichtung ermöglicht wird. Die Arbeitsstellen können einer der anzahlmäßig festzulegenden Gruppe ferner frei zugeordnet werden. Dadurch kann eine hohe Variabilität und Flexibilität mit Blick auf die unterschiedlichen Garnpartien herzustellenden Arbeitsstellen gewährleistet werden.

Das Verfahren umfasst des Weiteren einen dem Schritt des Erstellens nachfolgenden Schritt des Aktivierens einer im Vorwege gespeicherten Ansteuerroutine, die aus der erstellten Auswahl an Ansteuerroutinen ausgewählt ist. Die zu aktivierende Ansteuerroutine kann dabei in einem der Textilmaschine zugeordneten Speicher gespeichert sein. Alternativ oder zusätzlich kann die Ansteuerroutine auf einem mobilen Speichermedium bzw. Datenträger, wie beispielsweise einer CD-/DVD-ROM, einem Speicherstick, einer SD-Karte, einem via Kabel oder drahtlos verbindbaren externen Speicher oder ähnlichem gespeichert sein, der mit der Textilmaschine auslesbar koppelbar ist.

In einem nachfolgenden Schritt erfolgt eine Zuordnung der Arbeitsstellen jeweils zu einer basierend auf der aktivierten Ansteuerroutine anzusteuernden Gruppe. Die Arbeitsstellen der Offenend-Rotorspinnvorrichtung werden somit unter Berücksichtigung der aktivierten bzw. ausgewählten Ansteuerroutine gruppenmäßig erfasst. Im Anschluss werden die jeweiligen Gruppen von Arbeitsstellen mit entsprechend zugeordneten Steuerdaten basierend auf der aktivierten Ansteuerroutine von der Zentralsteuereinrichtung angesteuert. Die Zentralsteuereinrichtung übermittelt dabei die zum Herstellen einer spezifischen Garnpartie erforderlichen Steuerdaten entsprechend der Vorgabe durch die Ansteuerroutine an die Arbeitsstellen einer Gruppe, welche die zum Herstellen der zugeordneten, spezifische Garnpartie bestimmt ist.

Die mit dem vorgeschlagenen Verfahren erzielten Vorteile bestehen insbesondere darin, dass eine werksseitig ausgelegte Textilmaschine, insbesondere eine Offenend-Rotorspinnmaschine, bei Änderung der kundenspezifischen Anforderung lediglich die der neuen kundenspezifischen Anforderung gerecht werdende Ansteuerroutine aus einer Auswahl an Ansteuerroutinen auszuwählen und auf der Textilmaschine zu aktivieren ist. Dafür sollte die Textilmaschine, insbesondere die Offenend-Rotorspinnmaschine, werksseitig mit Arbeitsstellen ausgestattet werden, mittels derer unabhängig voneinander unterschiedliche Garnpartien herstellbar sind. Dadurch kann eine Textilmaschine, insbesondere eine Offenend-Rotorspinnmaschine, bereitgestellt werden, deren auf eine vorbestimmte Anzahl gleichzeitig herzustellender unterschiedlicher Garnpartien gerichtete werksseitige Auslegung durch einfache und kostengünstige Änderung lediglich mittels Änderung und Aktivierung einer entsprechenden Ansteuerroutine aus der erstellten Auswahl an Ansteuerroutinen auf eine zu der ursprünglichen Auslegung unterschiedliche Auslegung änderbar ist. Ein kundenseitiger Zeitraum eines Produktionsausfalls kann dadurch effektiv verkürzt werden.

Bei den relevanten Steuerdaten, die jeweils zum Herstellen einer definierten Garnpartie erforderlich sind, kann es sich beispielsweise um einen oder mehrere Parameter wie die Rotordrehzahl, die Drehung, den Kreuzungswinkel des aufzuwickelnden Fadens, den Spulenhub, die Reinigungsgrenze, die Anspinnereinstellung, den zu erreichenden Spulendurchmesser, die zu erreichende aufgewickelte Garnlänge auf der Kreuzspule, die Geschwindigkeit der Faserbandeinzugszylinder oder ähnliche, das Garn beeinflussende Parameter handeln. Bekanntermaßen wirkt sich eine Änderung sämtlicher dieser Parameter auf die Eigenschaft des herzustellenden Garns aus. Dadurch kann beispielsweise bei einer Arbeitsstelle durch Änderung nur eines Parameters bereits ein anderes Garn bzw. eine unterschiedliche Garnpartie hergestellt werden.

Nach einer bevorzugten Ausführungsform der Erfindung weist das Verfahren einen Schritt des Sperrens einer möglichen Auswahl nichtaktivierter Ansteuerroutinen für einen Bediener der Textilmaschine, insbesondere der Offenend-Rotorspinnmaschine, auf. Der Schritt des Sperrens kann vorzugsweise gleichzeitig mit dem Schritt des Aktivierens oder diesem nachfolgend erfolgen. Weiter bevorzugt wird mit dem Schritt des Sperrens die mögliche Auswahl der nichtaktivierten Ansteuerroutinen elektronisch gesperrt, beispielsweise deaktiviert, wobei eine Deaktivierung der Sperre weiter bevorzugt eine elektronische Aktivierung, beispielsweise mittels Freigabe durch einen vorbestimmbaren Code, erfordert. Dadurch kann sichergestellt werden, dass ein Bediener der Textilmaschine keine ungewollten Änderungen hinsichtlich der werksseitig kundenspezifisch eingestellten Auslegung vornimmt.

Gemäß einer bevorzugten Ausführungsform weist die Textilmaschine, insbesondere die Offenend-Rotorspinnmaschine, wenigstens zwei Maschinenseiten auf, an denen jeweils Arbeitsstellen jeweils zum Herstellen einer Garnpartie angeordnet sind. Dabei ist die zweite Ansteuerroutine vorzugsweise ausgelegt, eine erste Gruppe von Arbeitsstellen an einer ersten Maschinenseite mit Steuerdaten zum Herstellen einer ersten Garnpartie und eine zweite Gruppe von Arbeitsstellen an der zweiten Maschinenseite mit Steuerdaten zum Herstellen einer zweiten Garnpartie anzusteuern.

Weiterhin bevorzugt ist die dritte Ansteuerroutine ausgelegt, jeweils eine anzahlmäßig festzulegende Gruppe von Arbeitsstellen pro Maschinenseite mit Steuerdaten entsprechend einer der jeweiligen Gruppe zugeordneten Festlegung einer herzustellenden Garnpartie anzusteuern. Damit kann im Rahmen der werksseitigen oder nachträglichen Auslegung der Textilmaschine, insbesondere der Offenend-Rotorspinnmaschine, die Produktion von Garnpartien für jede Maschinenseite spezifisch festgelegt werden. Dadurch kann zudem ein einfacher Überblick über die produzierbaren Garnpartien pro Maschinenseite der Textilmaschine ermöglicht werden.

Weiter bevorzugt umfasst die Auswahl der Ansteuerroutinen eine vierte Ansteuerroutine, welche ausgelegt ist, eine erste Gruppe von einer Maschinenseite zugeordneten Arbeitsstellen mit Steuerdaten zum Herstellen einer ersten Garnpartie und eine zweite Gruppe von aus den übrigen dieser Maschinenseite zugeordneten Arbeitsstellen mit Steuerdaten zum Herstellen einer zweiten Garnpartie und eine dritte Gruppe von der anderen Maschinenseite zugeordneten Arbeitsstellen mit Steuerdaten zum Herstellen einer dritten Garnpartie anzusteuern. Mit der vierten Ansteuerroutine ist die Textilmaschine, insbesondere die Offenend-Rotorspinnmaschine dahingehend auslegbar, dass auf einer der beiden Maschinenseiten eine parallele Herstellung von zwei Garnpartien möglich ist, während auf der zweiten Maschinenseite eine davon unterschiedliche dritte Garnpartie herstellbar ist. Die vierte Ansteuerroutine erhöht somit von vornherein die Optionen der Auslegungsmöglichkeiten für die Textilmaschine. Dadurch können nachträgliche zeitaufwändige und durchaus kostenintensive Maßnahmen zum Erstellen und Aktivieren einer solchen Ansteuerroutine vermieden werden, wodurch eine Anpassung der Textilmaschine an eine solche Auslegung kostengünstiger durchführbar ist.

Nach einer bevorzugten Ausführungsform weist das Verfahren einen Zwischenschritt des Speicherns wenigstens einer weiteren Ansteuerroutine aus der erstellten Auswahl an Ansteuerroutinen in den Speicher und nachfolgend einen Zwischenschritt des Auswählens einer der gespeicherten Ansteuerroutinen zum Ansteuern der jeweiligen Arbeitsstellen auf, wobei die Zwischenschritte dem Schritt des Aktivierens vorangestellt sind. Die Textilmaschine, insbesondere die Offenend-Rotorspinnmaschine, kann dadurch am Installationsort den Kundenanforderungen entsprechend ausgelegt werden. Kurzfristige Änderungen der Auslegung lassen sich ferner unverzüglich ohne erhöhten Aufwand umsetzen.

In bevorzugter Weise weist das Verfahren nach einer bevorzugten Ausführungsform einen Schritt des Isolierens wenigstens einer der Arbeitsstellen aus dem auf der Ansteuerroutine basierenden Ansteuerprozess auf. Dieser Schritt ist vorzugsweise dem Schritt des Zuordnens, weiter bevorzugt dem Schritt des Ansteuerns nachgelagert. Mittels der Isolierung kann sichergestellt werden, dass vorbestimmte Arbeitsstellen aus dem Ansteuerprozess der Ansteuerroutine und somit aus der angesteuerten Gruppe der produzierenden Arbeitsstellen gezielt herausgenommen werden können. Die Isolierung kann beispielsweise für Wartungszwecke vorteilhaft sein, ohne den Produktionsprozess der Textilmaschine, insbesondere der Offenend-Rotorspinnmaschine, erheblich zu beeinflussen. Auch kann mittels der Isolierung beispielsweise eine weitere Garnpartie an der wenigstens einen isolierten Arbeitsstelle hergestellt werden, in dem im Rahmen der Isolierung entsprechende zur Herstellung der weiteren Garnpartie erforderliche Steuerdaten zum Ansteuern der wenigstens einen isolierten Garnpartie gespeichert werden. Vorzugsweise ist die Zentralsteuereinrichtung dabei ausgelegt, vorbestimmte Arbeitsstellen außerhalb der aktivierten Ansteuerroutine anzusteuern. Alternativ oder zusätzlich bevorzugt führt eine der isolierten Arbeitsstelle zugeordnete Arbeitsstellen-Steuereinrichtung die Einzelansteuerung aus. Mehrere isolierte Arbeitsstellen können weiterhin alternativ oder zusätzlich bevorzugt über eine vorgesehene Sektionssteuereinheit entsprechend angesteuert werden.

Gemäß einer bevorzugten Ausführungsform weist das Verfahren im Falle der Aktivierung einer Ansteuerroutine aus der Auswahl der Ansteuerroutinen mit Ausnahme der ersten Ansteuerroutine einen Schritt des Neuzuordnens wenigstens einer Arbeitsstelle aus der Gruppe von Arbeitsstellen zum Herstellen einer der Garnpartien zu einer dazu unterschiedlichen Gruppe von Arbeitsstellen auf, die zum Herstellen einer anderen Garnpartie angesteuert werden. Eine Produktionsmenge der entsprechenden Garnpartien kann den Umständen entsprechend angepasst werden, ohne eine vollständige Neuzuordnung von Arbeitsstellen vornehmen zu müssen. Die entsprechend aktivierte Ansteuerroutine ist dadurch mit einfachen Mitteln anpassbar.

Nach einem weiteren Aspekt der vorliegenden Erfindung wird zur Lösung der vorstehend aufgeführten Aufgabe ein Computerprogrammprodukt, insbesondere ein wie vorstehend beispielhaft ausgestaltetes Speichermedium, mit einem Computerprogramm zum Durchführen eines Verfahrens nach einer der vorstehend bevorzugten Ausführungsformen auf der Textilmaschine, insbesondere der Offenend-Rotorspinnmaschine, bereitgestellt. Durch ein solches Computerprogrammprodukt kann eine werksseitig festgelegte Auslegung einer bestehenden Textilmaschine beispielsweise mittels eines Updates an geänderte Kundenanforderungen betreffend die Auslegung der Textilmaschine kostengünstig angepasst werden. Beispielsweise kann das Computerprogramm derart aufgebaut sein, dass es beim Einlesen in der Textilmaschine, insbesondere der Offenend-Rotorspinnmaschine, Anweisungen für einen Bediener zum Durchführen des vorgeschlagenen Verfahrens zur Anzeige bringt.

Zur Ausführung des Verfahrens können vorzugsweise die dem Schritt des Erstellens einer Auswahl an Ansteuerroutinen nachfolgenden Schritte oder sämtliche Schritte beispielsweise mittels einer an der Textilmaschine, insbesondere der Offenend-Rotorspinnmaschine, angeordneten Eingabe- und Anzeigeeinheit durchgeführt werden. Die Eingabe- und Anzeigeeinheit ist dabei weiter bevorzugt mit einem Speicher der Textilmaschine gekoppelt, um die mittels dieser Einheit eingegebenen Daten und/oder Befehle bedarfsgerecht speichern zu können, basierend auf welchen ein Ansteuern der jeweiligen Arbeitsstellen durch die Zentralsteuereinrichtung erfolgt. So kann am Installationsort der Textilmaschine ohne weitere Hilfsmittel eine Anpassung der Auslegung der Offenend-Rotorspinnmaschine betreffend die Garnpartieherstellung vorgenommen werden. Alternativ bevorzugt kann das vorgeschlagene Verfahren mittels einer an die Textilmaschine koppelbare mobile Rechnereinheit wie einen mobilen Computer, beispielsweise Notebook, Tablet, Smartphone oder ähnliches, durchgeführt werden.

Das vorgeschlagene Verfahren eignet sich aus Kostensicht insbesondere für eine semiautomatische Offenend-Rotorspinnmaschine mit Arbeitsstellen, mittels welcher unterschiedliche Garnpartien parallel herstellbar sind, wie beispielsweise aus dem eingangs genannten Stand der Technik bekannt. Dadurch kann eine von vornherein kostengünstige semiautomatische Offenend-Rotorspinnmaschine als Grundlage für eine werkseitig zunächst einfach ausgelegte Textilmaschine hergenommen werden, bei welcher eine Änderung der Auslegung betreffend die Garnpartienherstellung mittels des vorgeschlagenen Verfahrens ohne erhöhten Aufwand, zeitsparend und kostengünstig durchführbar ist.

Das Verfahren kann in entsprechender Weise auch bei Spulmaschinen Anwendung finden. Spulmaschinen unterscheiden sich in üblicher Weise von einer wie beispielhaft vorstehend beschriebenen Offenend-Rotorspinnvorrichtung lediglich dadurch, dass anstelle von Komponenten zum Spinnen des Garns bzw. Fadens Komponenten zum drehbweglichen Halten eines Spinnkopses und zum Abziehen eines auf den drehbeweglich gehaltenen Spinnkops gewickelten Fadens vorgesehen sind.

Weitere Merkmale und Vorteile der Erfindung ergeben sich aus der nachfolgenden Beschreibung von bevorzugten Ausführungsbeispielen der Erfindung, anhand der Figuren und Zeichnungen, die erfindungswesentliche Einzelheiten zeigen, und aus den Patentansprüchen. Die einzelnen Merkmale können je einzeln für sich oder zu mehreren in beliebiger Kombination bei einer bevorzugten Ausführungsform der Erfindung verwirklicht sein.

Bevorzugte Ausführungsbeispiele der Erfindung werden nachfolgend anhand der beigefügten Zeichnungen näher erläutert.

Es zeigen:
- Fig. 1: eine schematische Frontansicht einer Maschinenseite einer vorbekannten semiautomatischen Offenend-Rotorspinnmaschine, auf welcher ein Verfahren nach einem bevorzugten Ausführungsbeispiel ausführbar ist;
- Fig. 2: ein Ablaufdiagramm eines Verfahrens nach einem bevorzugten Ausführungsbeispiel auf einer in Fig. 1 gezeigten Offenend-Rotorspinnmaschine;
- Fig. 3 bis 6: schematische Darstellungen von Ansteuerroutinen für ein Verfahren nach einem bevorzugten Ausführungsbeispiel; und
- Fig. 7: eine schematische Draufsicht einer in Fig. 1 gezeigten Offenend-Rotorspinnmaschine.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

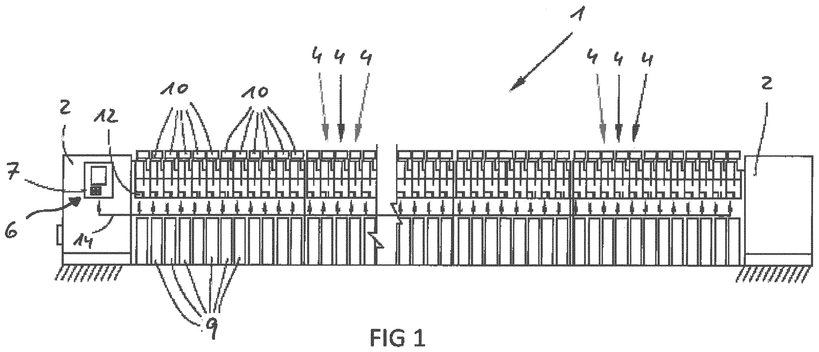

Figur 1 zeigt schematisch eine Frontansicht einer Maschinenseite eine aus dem eingangs genannten Stand der Technik vorbekannten semiautomatischen Offenend-Rotorspinnmaschine 1, auf welcher ein Verfahren nach einem bevorzugten Ausführungsbeispiel ausführbar ist. Die Offenend-Rotorspinnmaschine 1 weist eine Mehrzahl von Arbeitsstellen 4 zwischen sogenannten Endgestellen 2 auf, die, wie bekannt und daher nicht näher dargestellt, über durchgehende Ver- und Entsorgungskanäle, beispielsweise einen Unterdruckkanal zur Versorgung von Spinnvorrichtungen mit Spinnunterdruck, einen Elektronikkanal für ein Bussystem und/oder eine Garnüberwachungseinrichtung sowie einen Kabelkanal zur Versorgung der Arbeitsstellen 4 mit elektrischer Energie, verbunden sind.

An diesen Ver- und Entsorgungskanälen sind die Garnbildungs- bzw. Kreuzspulwickeleinrichtungen der Offenend-Rotorspinnmaschine 1 festlegbar, welche die Arbeitsstellen 4 ausbilden.

An den Arbeitsstellen 4 wird ein Vorlagefaserband, das in Spinnkannen 9 bevorratet ist, zu einem Garn gesponnen, welches auf Kreuzspulen 10 aufgewickelt wird.

In den Endgestellen 2 sind beispielsweise eine (nicht dargestellte) textilmaschineneigene Unterdruckversorgungseinrichtung, eine elektrische Energieversorgung sowie eine Zentralsteuereinrichtung 6 der Offenend-Rotorspinnmaschine 1 angeordnet.

Die Zentralsteuereinheit 6 ist ihrerseits mit Arbeitsstellen-Steuereinrichtungen 12 über ein Bussystem 14 verbunden.

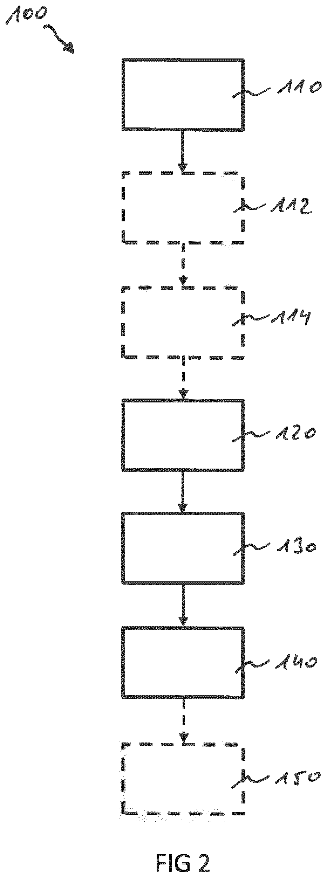

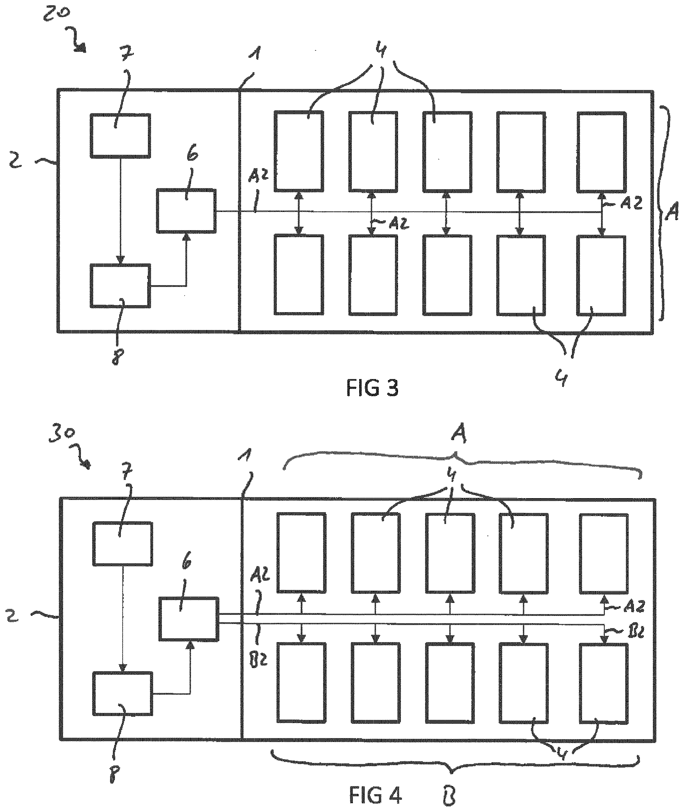

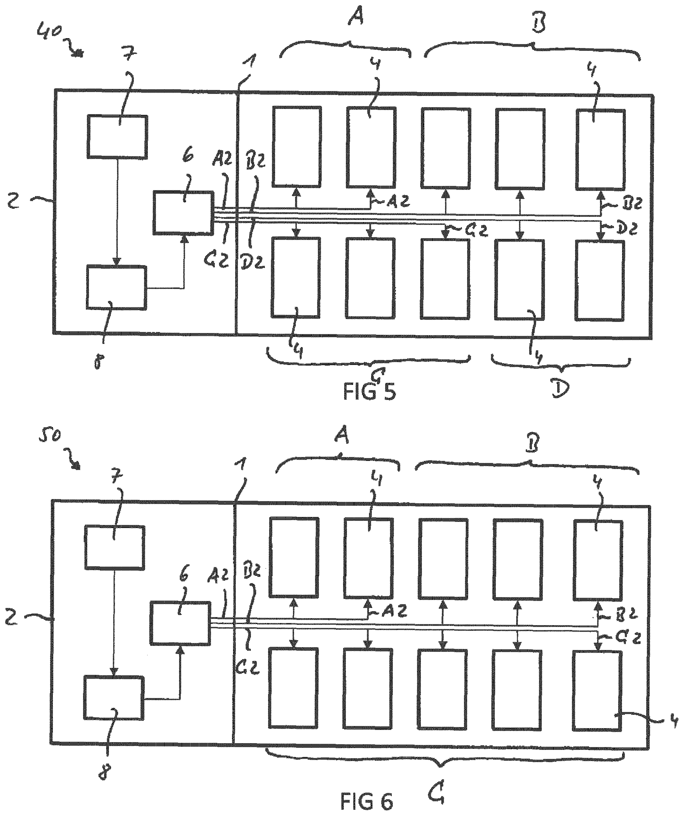

Figur 2 zeigt ein Ablaufdiagramm eines bevorzugten Verfahrens 100 zum Anpassen einer Garnpartieherstellung auf der in Figur 1 gezeigten Offenend-Rotorspinnmaschine 1. Das Verfahren 100 umfasst einen Schritt 110 des Erstellens einer Auswahl an Ansteuerroutinen 20, 30, 40, 50 (Figuren 3 bis 6). Die Auswahl an Ansteuerroutinen 20, 30, 40, 50 umfasst eine erste Ansteuerroutine 20 zum Ansteuern aller Arbeitsstellen 4 mit Steuerdaten A2 zum Herstellen einer ersten Garnpartie A1 (Figur 3), eine zweite Ansteuerroutine 30 zum Ansteuern einer ersten Gruppe A von Arbeitsstellen 4 mit Steuerdaten A2 zum Herstellen einer ersten Garnpartie A1 und zum Ansteuern einer zweiten Gruppe B von Arbeitsstellen 4 mit Steuerdaten B2 zum Herstellen einer zweiten Garnpartie B1 (Figur 4), und eine dritte Ansteuerroutine 40 zum jeweiligen Ansteuern einer anzahlmäßig festzulegenden Gruppe A, B, C, D von Arbeitsstellen 4 mit Steuerdaten A2, B2, C2, D2 entsprechend einer der jeweiligen Gruppe A, B, C, D zugeordneten Festlegung einer herzustellenden Garnpartie, wobei die Anzahl der festzulegenden Gruppen A, B, C, D zwei übersteigt (Figur 5). Nach einem weiteren bevorzugten Ausführungsbeispiel umfasst die zu erstellende Auswahl eine vierte Ansteuerroutine 50 zum Ansteuern einer ersten Gruppe A von einer der Maschinenseiten 16, 18 zugeordneten Arbeitsstellen 4 mit Steuerdaten A2 zum Herstellen einer ersten Garnpartie und zum Ansteuern einer zweiten Gruppe B von aus den übrigen dieser Maschinenseite 16 zugeordneten Arbeitsstellen 4 mit Steuerdaten B2 zum Herstellen einer zweiten Garnpartie und zum Ansteuern einer dritten Gruppe C von der anderen Maschinenseite 18 zugeordneten Arbeitsstellen 4 mit Steuerdaten C2 zum Herstellen einer dritten Garnpartie (Figur 6). Das Erstellen der Auswahl an Ansteuerroutinen 20, 30, 40, 50 kann beispielsweise abseits der Offenend-Rotorspinnmaschine 1 an einer nicht dargestellten Rechnereinheit vorgenommen werden, auf welchem die erstellte Auswahl dann übertragbar gespeichert ist.

Das Verfahren 100 weist einen nachfolgenden Schritt 120 des Aktivierens einer im Vorwege gespeicherten Ansteuerroutine, ausgewählt aus der erstellten Auswahl an Ansteuerroutinen 20, 30, 40, 50 auf. Dazu wird die ausgewählte zu speichernde Ansteuerroutine mittels eines Datentransfers zwischen der Rechnereinheit und der Zentralsteuereinrichtung 6 auf die Offenend-Rotorspinnmaschine 1 übertragen und nach Übertragung automatisch softwareseitig aktiviert.

Anschließend erfolgt ein Schritt 130 des Zuordnens der Arbeitsstellen 4 jeweils zu einer basierend auf der aktivierten Ansteuerroutine 20; 30; 40; 50 anzusteuernden Gruppe A, B, C, D. Dadurch erfolgt eine genaue Festlegung der Ansteuerung der gruppenmäßig zusammengefassten Arbeitsstellen 4 mit entsprechenden Steuerdaten A2; B2; C2; D2 zum Herstellen zugeordneter Garnpartien. Die Zuordnung kann softwareunterstützt automatisch oder manuell durch einen Bediener mittels der Rechnereinheit oder mittels einer Eingabe- und Anzeigeeinheit 7 der Zentralsteuereinrichtung 6 erfolgen.

Das Verfahren 100 findet seinen Abschluss in dem Schritt 140 des Ansteuerns der jeweiligen Arbeitsstellen-Gruppen A, B, C, D mit entsprechend zugeordneten Steuerdaten A2; B2; C2; D2 basierend auf der aktivierten Ansteuerroutine ausgewählt aus der erstellten Auswahl an Ansteuerroutinen 20, 30, 40, 50. Der Schritt 140 des Ansteuerns wird von der Zentralsteuereinrichtung 6 spätestens mit Beginn der Produktion der vorbestimmten Garnpartien bzw. mit jeweiligem Garnproduktionsstart der Offenend-Rotorspinnmaschine 1 durchgeführt.

Das Verfahren 100 umfasst optional einen Schritt 150 des Sperrens einer möglichen Auswahl nichtaktivierter Ansteuerroutinen. Dadurch wird eine mögliche Auswahl und Aktivierung einer anderen Ansteuerroutine als die der aktivierten verhindert. Der Sperrschritt 150 kann softwareunterstützt automatisch durchgeführt werden. Beispielsweise kann mit Aktivieren der ausgewählten Ansteuerroutine gleichzeitig ein Sperren der Auswahl der übrigen Ansteuerroutinen einhergehen. Alternativ oder zusätzlich kann eine solche Sperrmöglichkeit manuell durch einen Bediener vorgesehen sein.

Das Verfahren 100 weist des Weiteren optional einen Zwischenschritt 112 des Speicherns wenigstens einer weiteren Ansteuerroutine aus der erstellten Auswahl an Ansteuerroutinen 20, 30, 40, 50 in den Speicher und nachfolgend einen Zwischenschritt 114 des Auswählens einer der gespeicherten Ansteuerroutinen zum Ansteuern der jeweiligen Arbeitsstellen 4 auf, wobei die Zwischenschritte 112, 114 dem Schritt 120 des Aktivierens vorangestellt sind. Das Speichern der weiteren Ansteuerroutine kann vorzugsweise zusammen mit dem vorstehend beschriebenen Speichern der Ansteuerroutine erfolgen.

Die Rechnereinheit kann grundsätzlich als ein Speichermedium mit einem Computerprogramm dienen, mittels dem sämtliche Verfahrensschritte des bevorzugten Verfahrens durchführbar sind. Alternativ können diese Schritte mittels der Eingabe- und Anzeigeeinheit 7 der Zentralsteuereinrichtung 6 durchgeführt werden. Dazu kann beispielsweise ein mit der Eingabe- und Anzeigeeinheit 7 interagierendes Computerprogramm vorgesehen sein, welches auf einem von der Offenend-Rotorspinnmaschine 1 lesbaren Speichermedium lesbar und auf dieser ausführbar ist, wobei die einzelnen Schritte mittels eines Abfrage- und Eingabeprozesses über die Eingabe- und Anzeigeeinheit 7 abgearbeitet werden. Das Speichermedium kann via Kabel oder drahtlos mit der Offenend-Rotorspinnvorrichtung 1 gekoppelt werden.

Nach einem weiteren nicht dargestellten bevorzugten Ausführungsbeispiel weist das Verfahren 100 einen Schritt des Isolierens wenigstens einer der Arbeitsstellen 4 aus dem auf der aktivierten Ansteuerroutine basierenden Ansteuerprozess auf. Der Isolierschritt kann mittels der Eingabe- und Anzeigeeinheit 7 ausgeführt werden. Die dadurch isolierte und aus dem Produktionsprozess herausgenommene Arbeitsstelle 4 kann zu anderen Zwecken wie Wartung, Testbetrieb oder ähnliches genutzt werden.

Gemäß einem weiteren nicht dargestellten bevorzugten Ausführungsbeispiel kann mittels des Verfahrens ein Anpassen der aktivierten Ansteuerroutine, die aus der zweiten bis vierten Ansteuerroutine 30, 40, 50 ausgewählt ist, vorgenommen werden. Dazu weist das Verfahren 100 einen Schritt des Neuzuordnens wenigstens einer Arbeitsstelle 4 aus einer der Gruppen A, B, C, D zu einer dazu unterschiedlichen Gruppe A; B; C; D auf. Die Produktivität wenigstens einer Arbeitsstellen-Gruppe bleibt somit trotz aktivierter Ansteuerungsroutine bedarfsgerecht anpassbar.

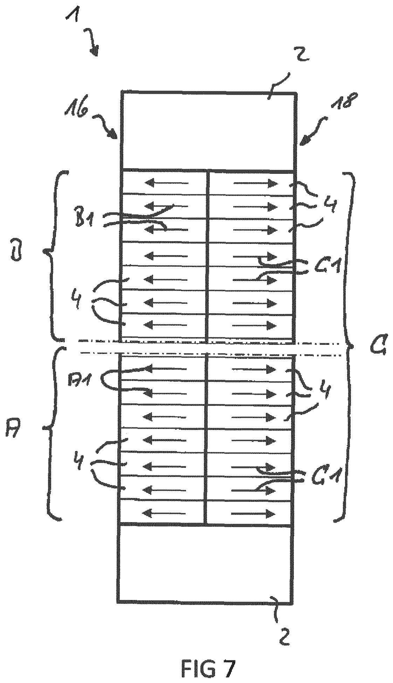

Figuren 4 bis 7 zeigen schematische Ablaufdiagramme der vorstehend beschriebenen ersten bis vierten Ansteuerroutine 20, 30, 40, 50. Die Offenend-Rotorspinnmaschine 1 weist im Bereich des Endgestells 2 die Zentralsteuereinrichtung 6 auf, die mit einem Speicher 8 gekoppelt ist, der mittels der Eingabe- und Anzeigeeinheit 7 eingegebene Daten und Befehle speichert. Bei den Befehlen handelt es sich um Steuerbefehle zur Ausführung der jeweiligen Ansteuerroutine 20, 30, 40, 50. Bei den Daten handelt es sich um die jeweiligen Steuerdaten A2; B2; C2; D2 zum Herstellen einer entsprechend festgelegten Garnpartie. Die Steuerdaten A2; B2; C2; D2 sind dabei vorzugsweise mittels der Eingabe- und Anzeigeeinheit 7 anpassbar, um Änderungen an der jeweiligen Garnpartie vornehmen zu können. Die Zentralsteuereinrichtung 6 liest diese Daten aus und steuert die jeweiligen gruppenmäßig zusammengefassten Arbeitsstellen 4 gemäß Vorgabe der aktivierten Ansteuerroutine zum Herstellen der spezifischen Garnpartie an.

Figur 8 zeigt eine schematische Draufsicht einer in Fig. 1 gezeigten Offenend-Rotorspinnmaschine 1, auf der das Verfahren 100 basierend auf der aktivierten vierten Ansteuerroutine 50 ausgeführt ist. Die Arbeitsstellen 4 der Offenend-Rotorspinnmaschine 1 sind im Einklang mit der vierten Ansteuerroutine 50 in drei Gruppen A, B und C maschinenseitig zusammengefasst. Die auf der ersten Maschinenseite 16 angeordneten Arbeitsstellen 4 sind dabei in zwei Gruppen A und B zusammengefasst, während die auf der zweiten Maschinenseite 18 angeordneten Arbeitsstellen 4 die dritte Gruppe C ausmachen. Basierend auf der vierten Ansteuerroutine 50 werden die Arbeitsstellen 4 derart von der Zentralsteuereinrichtung 6 angesteuert, dass die Arbeitsstellen 4 der ersten Gruppe A die erste Garnpartie A1, die Arbeitsstellen 4 der zweiten Gruppe B die zweite Garnpartie B1 und die Arbeitsstellen 4 der dritten Gruppe C die dritte Garnpartie C1 produzieren.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander, im Rahmen der Ansprüche, kombiniert werden. Auch kann ein Ausführungsbeispiel durch Merkmale eines weiteren Ausführungsbeispiels ergänzt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (100) zum Ändern einer eine Garnpartieherstellung betreffenden werksseitigen Auslegung einer Textilmaschine, insbesondere einer Offenend-Rotorspinnmaschine (1), an eine zu der werksseitigen Auslegung unterschiedliche Auslegung basierend auf einer spezifischen Anforderung, wobei die Textilmaschine mehrere Arbeitsstellen (4) jeweils zum Herstellen einer Garnpartie (A1; B1; C1) und eine Zentralsteuereinrichtung (6) aufweist, die eingerichtet ist, basierend auf einer aus einem Speicher (8) auslesbaren Ansteuerroutine (20; 30; 40; 50) die eine gleiche Garnpartie (A1; B1; C1) herstellenden Arbeitsstellen (2) mit zum Herstellen der gleichen Garnpartie (A1; B1; C1) erforderlichen Steuerdaten (A2; B2; C2; D2) anzusteuern; wobei die Arbeitsstellen (4) werksseitig derart ausgestattet sind, dass mittels der Arbeitsstellen (4) unabhängig voneinander unterschiedliche Garnpartien (A1, B1, C1) umfassend wenigstens eine erste Garnpartie (A1), eine zweite Garnpartie (B1) und eine dritte Garnpartie (C1) herstellbar sind;
**dadurch gekennzeichnet, dass** das Verfahren (100) umfasst
- einen Schritt (110) des Erstellens einer Auswahl an Ansteuerroutinen (20, 30, 40, 50) umfassend eine erste Ansteuerroutine (20) zum Ansteuern aller Arbeitsstellen (4) mit Steuerdaten (A2) zum Herstellen der ersten Garnpartie (A1), eine zweite Ansteuerroutine (30) zum Ansteuern einer ersten Gruppe (A) von Arbeitsstellen (4) mit Steuerdaten (A2) zum Herstellen der ersten Garnpartie (A1) und zum Ansteuern einer zweiten Gruppe (B) von Arbeitsstellen (4) mit Steuerdaten (B2) zum Herstellen der zweiten Garnpartie (B1), und eine dritte Ansteuerroutine (40) zum jeweiligen Ansteuern einer anzahlmäßig festzulegenden Gruppe (A; B, C, D) von Arbeitsstellen (4) mit Steuerdaten (A2; B2; C2; D2) entsprechend einer der jeweiligen Gruppe (A; B, C, D) zugeordneten Garnpartie (A1; B1; C1), wobei die Anzahl der festzulegenden Gruppen (A, B, C, D) zwei übersteigt;
- nachfolgend einen Schritt (120) des Aktivierens einer im Vorwege gespeicherten Ansteuerroutine (20; 30; 40; 50) ausgewählt aus der erstellten Auswahl an Ansteuerroutinen (20, 30, 40, 50);
- nachfolgend einen Schritt (130) des Zuordnens von Arbeitsstellen (4) jeweils zu einer basierend auf der aktivierten Ansteuerroutine (20; 30; 40; 50) anzusteuernden Gruppe (A, B, C, D); und
- nachfolgend einen Schritt (140) des Ansteuerns der jeweiligen Gruppe (A; B; C; D) von Arbeitsstellen (4) mit entsprechend zugeordneten Steuerdaten (A2; B2; C2; D2) basierend auf der aktivierten Ansteuerroutine (20; 30; 40; 50) durch die Zentralsteuereinrichtung (6),
wobei die aktivierte Ansteuerroutine zu einer im Vergleich zu der werksseitigen Auslegung der Textilmaschine geänderten Auslegung der Textilmaschine führt.

2. Verfahren (100) nach Anspruch 1, **dadurch gekennzeichnet, dass** das Verfahren (100) einen Schritt (150) des Sperrens einer möglichen Auswahl nichtaktivierter Ansteuerroutinen aufweist (20; 30; 40; 50).

3. Verfahren (100) nach Anspruch 1 oder 2, wobei die Textilmaschine (1) wenigstens zwei Maschinenseiten (16, 18) aufweist, an denen jeweils Arbeitsstellen (4) jeweils zum Herstellen einer Garnpartie (A1; B1; C1) angeordnet sind, **dadurch gekennzeichnet, dass** die erstellte Auswahl an Ansteuerroutinen (20, 30, 40, 50) eine vierte Ansteuerroutine (50) zum Ansteuern einer ersten Gruppe (A) von einer der Maschinenseiten (16, 18) zugeordneten Arbeitsstellen (4) mit Steuerdaten (A2) zum Herstellen der ersten Garnpartie (A1) und zum Ansteuern einer zweiten Gruppe (B) von aus den übrigen dieser Maschinenseite (16; 18) zugeordneten Arbeitsstellen (4) mit Steuerdaten (B2) zum Herstellen der zweiten Garnpartie (B1) und zum Ansteuern einer dritten Gruppe (C) von der anderen Maschinenseite (16; 18) zugeordneten Arbeitsstellen (4) mit Steuerdaten (C2) zum Herstellen der dritten Garnpartie (C1) aufweist.

4. Verfahren (100) nach einem der vorherigen Ansprüche, **dadurch gekennzeichnet, dass** das Verfahren (100) einen Zwischenschritt (112) des Speicherns wenigstens einer weiteren Ansteuerroutine (20; 30; 40; 50) aus der erstellten Auswahl an Ansteuerroutinen (20, 30, 40, 50) in den Speicher (8) und nachfolgend einen Zwischenschritt (114) des Auswählens einer der gespeicherten Ansteuerroutinen (20; 30; 40; 50) zum Ansteuern der jeweiligen Arbeitsstellen (4) aufweist, wobei die Zwischenschritte (112, 114) dem Schritt (120) des Aktivierens vorangestellt sind.

5. Verfahren (100) nach einem der vorherigen Ansprüche, **dadurch gekennzeichnet, dass** das Verfahren (100) einen Schritt des Isolierens wenigstens einer der Arbeitsstellen (4) aus dem auf der aktivierten Ansteuerroutine (20; 30; 40; 50) basierenden Ansteuerprozess aufweist, wodurch die wenigstens eine isolierte Arbeitsstelle (4) von dem Ansteuerprozess der aktivierten Ansteuerroutine (20; 30; 40; 50) ausgenommen wird.

6. Verfahren (100) nach einem der vorherigen Ansprüche, **dadurch gekennzeichnet, dass** das Verfahren (100) im Falle der Aktivierung einer Ansteuerroutine (30; 40; 50) aus der Auswahl der Ansteuerroutinen (20, 30, 40, 50) mit Ausnahme der ersten Ansteuerroutine (20) einen Schritt des Neuzuordnens wenigstens einer Arbeitsstelle (4) aus der Gruppe (A; B; C; D) von Arbeitsstellen (4) zum Herstellen einer der Garnpartien (A1, B1, C1) zu einer dazu unterschiedlichen Gruppe (A; B; C; D) von Arbeitsstellen (4), die zum Herstellen einer anderen Garnpartie (A1; B1; C1) angesteuert werden, aufweist.

7. Computerprogrammprodukt, insbesondere Speichermedium, mit einem Computerprogramm zum Durchführen eines Verfahrens (100) zum Anpassen einer Garnpartieherstellung auf einer Textilmaschine, insbesondere einer Offenend-Rotorspinnmaschine (1), nach einem der vorangegangenen Ansprüche.

## Claims

1. Method (100) for changing a factory-set design relating to a yarn-lot manufacture of a textile machine, more particularly an open-end rotor spinning machine (1), to a configuration different from the factory-set design, on the basis of a specific requirement, the textile machine having a plurality of workstations (4) for producing a yarn lot (A1; B1; C1), and a central control device (6), which is designed to control, on the basis of a control routine (20; 30; 40; 50) which can be read out from a memory (8), the workstations (2) which produce a same yarn lot (A1; B1; C1) with control data (A2; B2; C2; D2) required for producing the same yarn lot (A1; B1; C1), and the workstations (4) being factory-equipped such that different yarn lots (A1, B1, C1), having at least a first yarn lot (A1), a second yarn lot (B1) and a third yarn lot (C1), can be produced by means of the workstations (4) independently of each other,
**characterised in that** the method (100) has
- a step (110) of creating a selection of control routines (20, 30, 40, 50), having a first control routine (20) for controlling all workstations (4) with control data (A2) for producing the first yarn lot (A1), a second control routine (30) for controlling a first group (A) of workstations (4) with control data (A2) for producing the first yarn lot (A1) and for controlling a second group (B) of workstations (4) with control data (B2) for producing the second yarn lot (B1), and a third control routine (40) for controlling groups (A; B, C, D) of workstations (4), which groups are to be defined with respect to the number of groups, with control data (A2; B2; C2; D2) corresponding to respective yarn lots (A1; B1; C1) assigned to the groups (A; B, C, D), the number of the groups (A, B, C, D) which are to be defined exceeding two;
- subsequently, a step (120) of activating a control routine (20; 30; 40; 50) stored in advance, selected from the created selection of control routines (20, 30, 40, 50);
- subsequently, a step (130) of assigning workstations (4) to a group (A, B, C, D) to be controlled on the basis of the activated control routine (20; 30; 40; 50); and
- subsequently, a step (140) of controlling the group (A; B; C; D) of workstations (4) in question with correspondingly assigned control data (A2; B2; C2; D2) on the basis of the activated control routine (20; 30; 40; 50) by means of the central control device (6),
the activated control routine leading to a configuration of the textile machine which is changed in comparison with the factory-set design of the textile machine.

2. Method (100) according to claim 1, **characterised in that** the method (100) has a step (150) of blocking a possible selection of unactivated control routines (20; 30; 40; 50).

3. Method (100) according to claim 1 or 2, the textile machine (1) having at least two machine sides (16, 18), on each of which workstations (4) for producing a yarn lot (A1; B1; C1) are arranged, **characterised in that** the created selection of control routines (20, 30, 40, 50) has a fourth control routine (50) for controlling a first group (A) of workstations (4) assigned to one of the machine sides (16, 18) with control data (A2) for producing the first yarn lot (A1) and for controlling a second group (B) of the other workstations (4) assigned to said machine side (16; 18) with control data (B2) for producing the second yarn lot (B1) and for controlling a third group (C) of workstations (4) assigned to the other machine side (16; 18) with control data (C2) for producing the third yarn lot (C1).

4. Method (100) according to one of the preceding claims, **characterised in that** the method (100) has an intermediate step (112) of storing in the memory (8) at least one additional control routine (20; 30; 40; 50) from the created selection of control routines (20, 30, 40, 50) and subsequently an intermediate step (114) of selecting one of the stored control routines (20; 30; 40; 50) for controlling the workstations (4) in question, the intermediate steps (112, 114) preceding the step (120) of activating.

5. Method (100) according to one of the preceding claims, **characterised in that** the method (100) has a step of isolating at least one of the workstations (4) from the control process based on the activated control routine (20; 30; 40; 50), whereby the isolated workstation (4), of which there is at least one, is excluded from the control process of the activated control routine (20; 30; 40; 50).

6. Method (100) according to one of the preceding claims, **characterised in that,** in the case of the activation of a control routine (30; 40; 50) from the selection of the control routines (20, 30, 40, 50) with the exception of the first control routine (20), the method (100) has a step of reassigning at least one workstation (4) from the group (A; B; C; D) of workstations (4) for producing one of the yarn lots (A1, B1, C1) to a different group (A; B; C; D) of workstations (4), which are controlled to produce a different yarn lot (A1; B1; C1).

7. Computer program product, more particularly storage medium, having a computer program for carrying out a method (100) for adjusting yarn lot production on a textile machine, more particularly an open-end rotor spinning machine (1), according to any one of the preceding claims.

## Revendications

1. Procédé (100) de modification d'une conception d'usine concernant la fabrication de lots de fil d'une machine textile, en particulier une machine à filer à rotor à fibres libérées (1), en une conception différente de la conception d'usine basée sur une exigence particulière, où la machine textile comporte plusieurs postes de travail (4) respectifs produisant un lot de fil (A1; B1; C1) et un dispositif de commande central (6) qui est configuré sur la base d'une routine de commande lisible (20; 30; 40; 50) à partir d'une mémoire (8) qui commande des postes de travail (2) produisant un même lot de fil (A1; B1; C1) avec les données de commande (A2; B2; C2; D2) requises pour produire le même lot de fil (A1; B1; C1) ; où les postes de travail (4) sont équipés en usine de telle sorte que différents lots de fil (A1; B1; C1) comprenant au moins un premier lot de fil (A1), un deuxième lot de fil (B1) et un troisième lots de fil (C1) peuvent être produits indépendamment les uns des autres au moyen des postes de travail (4) ;
**caractérisé en ce que** le procédé (100) comprend
- une étape (110) de création d'une sélection de routines de commandes (20; 30; 40; 50) comprenant une première routine de commande (20) pour la commande de tous les postes de travail (4) à l'aide des données de commande (A2) pour la fabrication du premier lot de fil (A1), une deuxième routine de commande (30) pour la commande d'un premier groupe (A) de postes de travail (4) à l'aide des données de commande (A2) pour la fabrication du premier lot de fil (A1), et pour la commande d'un deuxième groupe (B) de postes de travail (4) à l'aide de données de commande (B2) pour la fabrication d'un deuxième lot de fil (B1), et une troisième routine de commande (40) pour la commande respective d'un groupe (A ; B ; C ; D) à définir en termes de nombre de postes de travail (4) à l'aide de données de commande (A2 ; B2 ; C2 ; D2) en fonction d'un lot de fil (A1 ; B1 ; C1) attribué au groupe (A; B, C, D) respectif, où le nombre de groupes (A, B, C, D) à définir est supérieur à deux ;
- suivi d'une étape (120) d'activation d'une routine de commande (20 ; 30 ; 40 ; 50) préalablement sauvegardée sélectionnée dans la sélection de routines de commande (20, 30, 40, 50) créées ;
- suivi d'une étape (130) d'affectation de postes de travail (4) chacun en fonction d'un groupe (A, B, C, D) à commander sur la base d'une routine de commande (20; 30; 40; 50) activée; et
- suivi d'une étape (140) de commande d'un groupe respectif (A ; B ; C ; D) de postes de travail (4) à l'aide des données de commande (A2 ; B2 ; C2 ; D2) correspondantes attribuées sur la base de la routine de commande (20 ; 30 ; 40 ; 50) activée par le biais du dispositif de commande centrale (6),
où la routine de commande activée entraîne une modification de la conception de la machine textile par rapport à la conception d'usine de la machine textile.

2. Procédé (100) suivant la revendication 1, **caractérisé en ce que,** le procédé (100) comporte une étape (150) de blocage d'une sélection possible de routines de commandes non activées (20 ; 30 ; 40 ; 50).

3. Procédé (100) suivant la revendication 1 ou 2, par lequel une machine textile (1) comporte au moins deux côtés machine (16 ; 18), à chacun desquels sont affectés des postes de travail (4), chacun pour produire un lot de fil (A1 ; B1 ; C1), **caractérisé en ce que,** la sélection créée de routines de commande (20 ; 30 ; 40 ; 50) comporte un quart de la routine de commande (50) pour la commande d'un premier groupe (A) d'un des postes de travail (4) affecté à l'un des côtés de la machine (16; 18) à l'aide de données de commande (A2) pour la fabrication du premier lot de fil (A1) et pour la commande d'un deuxième groupe (B) d'un des postes de travail (4) affecté à l'autre côté machine (16; 18) à l'aide de données de commande (B2) pour la fabrication du deuxième lot de fil (B1) et pour la commande d'un troisième groupe (C) d'un des postes de travail (4) affecté à un autre côté machine (16 ;18) à l'aide de données de commande (C2) pour la fabrication du troisième lot de fil (C1).

4. Procédé (100) suivant une des revendications précédente, **caractérisé en ce que** le procédé (100) comporte une étape intermédiaire (112) de mémorisation d'au moins une autre routine de commande (20 ; 30 ; 40 ; 50) à partir de la sélection créée de routines de commande (20 ; 30 ; 40 ; 50) dans la mémoire (8) et suivant une étape intermédiaire (114) de sélection d'une des routines (20 ; 30 ; 40 ; 50) mémorisées pour la commande du poste de travail (4) respectif, où les étapes intermédiaires (112, 114) précèdent l'étape (120) d'activation.

5. Procédé (100) suivant une des revendications précédente, **caractérisé en ce que** le procédé (100) comporte une étape d'isolement d'au moins un des postes de travail (4) parmi les processus de commande basés sur la routine de commande (20 ; 30 ; 40 ; 50) activée, où le poste de travail (4) isolé de la routine de commande (20 ; 30 ; 40 ; 50) activée est exclu du processus de commande.

6. Procédé (100) suivant une des revendications précédente, **caractérisé en ce que** le procédé (100), en cas d'activation d'une routine de commande (30 ; 40 ; 50) parmi la sélection de routines de commande (20 ; 30 ; 40 ; 50) à l'exception de la première routine de commande (20), comporte une étape de réaffectation d'au moins un poste de travail (4) du groupe (A ; B ; C ; D) de postes de travail (4) pour la fabrication d'un des lots de fil (A1 ; B1 ; C1) à un groupe (A ; B ; C ; D) différent de postes de travail (4), qui est commandé pour la fabrication d'un autre lot de fil (A1 ; B1 ; C1).

7. Produit de programme informatique, en particulier moyen de stockage, doté d'un programme informatique pour la réalisation d'un procédé (100) visant à régler une fabrication de lot de fil sur une machine textile, en particulier une machine à filer à rotor à fibres libérées (1), selon une des revendications précédentes.
